# EUROPÄISCHE PATENTANMELDUNG

(11) **EP 4 814 476 A1**
(43) Veröffentlichungstag der Anmeldung: **30.09.2026**
(21) Anmeldenummer: 25165687.2
(22) Anmeldetag: 24.03.2025
(51) Int. Cl.: G01N 21/64, G01N 21/84, G01N 21/86

(54) **BESTIMMUNG EINER DURCH LÖSEMITTEL BEDINGTEN RESTFEUCHTE IM TROCKNUNGSPROZESS VON BATTERIEZELLELEKTRODEN**

(71) Anmelder: Siemens Aktiengesellschaft, 80333 München (DE); Friedrich-Alexander-Universität Erlangen-Nürnberg, in Vertretung des Freistaates Bayern, 91058 Erlangen (DE)
(72) Erfinder: Baldauf, Manfred, 91056 Erlangen (DE); Gröger, Andreas, 81735 München (DE); Mandel, Karl, 97261 Güntersleben (DE); Müssig, Stephan, 91052 Erlangen (DE); Reichstein, Jakob, 80798 München (DE); Zink, Andreas, 91054 Erlangen (DE)
(74) Vertreter: Siemens Patent Attorneys

(57) **Zusammenfassung**

Offenbart wird ein Verfahren und eine Vorrichtung zur Bestimmung einer durch Lösemittel (22) bedingten Restfeuchte im Trocknungsprozess von Batteriezellelektroden.

Ein Verfahren zur Bestimmung einer durch Lösemittel (22) bedingten Restfeuchte, wobei das Lösemittel (22) in einer Beschichtung (20) für Batteriezellelektroden enthalten ist, weist die folgenden Schritte auf:
- Bestimmen mindestens eines ersten Kennwertes einer Lumineszenzstrahlung der Beschichtung (20) nach einem Trocknungsprozess der Beschichtung (20), wobei die Lumineszenzstrahlung durch Suprapartikel (SP, SP1) oder Suprapartikelcluster (SC1, SC2, SC3, SC4, SC5) auf, neben oder in der Beschichtung (20) hervorgerufen wird,
- Zuordnen des bestimmten ersten Kennwertes zu einem, insbesondere ersten, Restfeuchtegehalt der Beschichtung (20) anhand einer bereitgestellten Korrelation, wobei die Korrelation Kennwerten der Lumineszenzstrahlung einen jeweiligen Feuchtegehalt zuordnet.

## Beschreibung

Die Erfindung betrifft ein Verfahren und eine Vorrichtung zur Bestimmung einer durch Lösemittel bedingten Restfeuchte im Trocknungsprozess von Batteriezellelektroden.

Bei der Herstellung von Batteriezellen wie beispielsweise Lithium-Ionen-Batteriezellen, werden lösemittelbasierte Slurries, die die Aktivmaterialien der jeweiligen Elektrode enthalten, insbesondere Grafit auf der Anode, Lithium-Nickel-Mangan-Kobalt-Oxide, kurz NMC, oder Lithium-Eisenphosphat, kurz LFP, auf der Kathode, in einem kontinuierlichen Prozess auf Ableiterfolien aus beispielsweise Kupfer oder Aluminium aufgetragen und anschließend in Trocknungsöfen getrocknet. Der Restgehalt des jeweiligen Lösungsmittels, insbesondere ein Wassergehalt oder Gehalt an N-Methyl-2-pyrrolidon, kurz NMP, wird im laufenden Prozess bisher nicht gemessen.

Bislang gibt es kein Verfahren zur inline-Feuchtemessung. Herkömmlicherweise wird an einer Stelle der etwa ein Kilometer langen Elektrodenbahnrolle eine kleine Probe ausgeschnitten und im Labor mittels Karl-Fischer-Titration analysiert. Dieser Prozess dauert mehrere Stunden und kann erst nach der Fertigstellung der Rolle durchgeführt werden. Er bietet keine Möglichkeit zur Anpassung des Trocknungsprozesses während der laufenden Produktion. Falls nachträglich ein zu hoher Restfeuchtegehalt festgestellt wird, muss die fertige Rolle entsorgt werden, was hohe Materialkosten und Zeitverluste verursacht.

Vor diesem Hintergrund ist es eine Aufgabe der vorliegenden Erfindung, ein Verfahren und eine Vorrichtung zur Verfügung zu stellen, die eine Bestimmung einer durch Lösemittel bedingten Restfeuchte im Trocknungsprozess von Batteriezellelektroden inline ermöglicht.

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zur Bestimmung einer durch Lösemittel bedingten Restfeuchte, wobei das Lösemittel in einer Beschichtung für Batteriezellelektroden enthalten ist, aufweisend die folgenden Schritte:
- Bestimmen mindestens eines ersten Kennwertes einer Lumineszenzstrahlung der Beschichtung nach einem Trocknungsprozess der Beschichtung, wobei die Lumineszenzstrahlung durch Suprapartikel oder Suprapartikelcluster auf, neben oder in der Beschichtung hervorgerufen wird,
- Zuordnen des bestimmten ersten Kennwertes zu einem, insbesondere ersten, Restfeuchtegehalt der Beschichtung anhand einer bereitgestellten Korrelation, wobei die Korrelation Kennwerten der Lumineszenzstrahlung einen jeweiligen Feuchtegehalt zuordnet.

Es werden Suprapartikel oder Suprapartikelcluster eingesetzt, deren Lumineszenzverhalten genutzt wird, um den Feuchtegehalt der Beschichtung während des Batteriezellenherstellungsprozesses schnell und präzise zu messen.

Lumineszenz ist die optische Strahlung eines physikalischen Systems, hier von Suprapartikeln oder Suprapartikelclustern, die beim Übergang von einem angeregten Zustand zum Grundzustand entsteht. Bei der Lumineszenz werden die Suprapartikel oder Suprapartikelcluster durch von außen zugeführte Energie in einen angeregten Zustand versetzt und emittieren beim Übergang in ihren jeweiligen Grundzustand Photonen, die als Lumineszenzstrahlung gemessen werden können.

Suprapartikel werden aus Nanopartikeln aufgebaut, die insbesondere kolloidal dispergiert sind und die aus sehr unterschiedlichen Materialklassen stammen können, wie beispielsweise Übergangsmetallen, Edelmetallen oder Siliziumoxid. Suprapartikel werden beispielsweise in dispergierter Form bereitgestellt, beispielsweise als Kolloid, Pulver oder Mikrokomposit. Insbesondere herrscht bei den bereitgestellten Suprapartikeln ein konsistentes Strukturmotiv vor, wie beispielsweise das einer Kristallpackung, fraktalen Dimension oder Konnektivität zum nächsten Nachbarn, definierten Durchschnittsgröße oder -form. Dies führt zur Schaffung zusätzlicher Funktionen wie insbesondere Kopplung, Emergenz oder Kolokalisierung.

Die Eigenschaften von Suprapartikeln können gezielt modifiziert werden. Die interessierende Eigenschaft ist beispielsweise das Lumineszenzverhalten, das u.a. von der chemischen Zusammensetzung der gewählten Nanopartikel abhängt, aus denen das Suprapartikel aufgebaut ist. Ebenso ist das Lumineszenzverhalten von Suprapartikelcluster abhängig von dem gewählten Typ Suprapartikel innerhalb eines Clusters.

Als Lösemittel werden im Herstellungsprozess der Anoden und Kathoden beispielsweise organische Carbonate wie Ethylencarbonat, Dimethylcarbonat und Diethylcarbonat oder N-Methyl-2-pyrrolidon, kurz NMP, sowie Wasser verwendet.

Die Suprapartikel oder Suprapartikelcluster sind in, auf oder an der Beschichtung und kommen so mit dem Lösemittel in Berührung oder nehmen es aus ihrer Umgebung auf und es stellt sich ein Gleichgewicht mit dem Feuchtegehalt der Umgebung, insbesondere der Beschichtung oder der Elektrodenbahn, ein. Die Suprapartikel oder Suprapartikelcluster nehmen Feuchte von der Umgebung auf oder geben diese beim Trocknen wieder ab gemäß den Umgebungsbedingungen.

Das Lumineszenzverhalten eines jeweiligen Suprapartikels oder Suprapartikelclusters hängt vom Feuchtegehalt des jeweiligen Suprapartikels oder Suprapartikelclusters ab. Somit kann ein erster Kennwert einer Lumineszenzstrahlung der Beschichtung nach einem Trocknungsprozess der Beschichtung ermittelt werden, um eine Aussage über den Trocknungsfortschritt zu erhalten.

Die eingesetzten Suprapartikel oder Suprapartikelcluster werden so gewählt, dass sie ein charakteristisches, vom Feuchtegrad abhängiges Lumineszenzverhalten zeigen. Die chemische Zusammensetzung und Struktur der Nanopartikel werden dafür so angepasst, dass sie durch ihre Lumineszenz anzeigen, dass sie einen bestimmten Trocknungsgrad erreicht haben.

Der Trocknungsprozess ist bei Ermittlung des Kennwertes beispielsweise abgeschlossen, oder es sind einzelne Teilschritte des Trocknungsprozesses abgeschlossen und verbleibende Teile des Trocknungsprozesses noch ausstehend oder ein weiterer Trocknungsprozess ausstehend.

Die bereitgestellte Korrelation ordnet Kennwerten der Lumineszenzstrahlung einen jeweiligen Feuchtegehalt zu. Beispielsweise sind Kennwerte in einer Kalibrierungstabelle hinterlegt und es ist ein Feuchtegehalt nachschlagbar oder abrufbar. Beispielsweise ist eine Zuordnungsvorschrift hinterlegt, mittels der aus einem ermittelten Kennwert ein Feuchtegehalt berechenbar oder abschätzbar ist.

Beispielsweise wurde die bereitgestellte Korrelation in einer Testphase ermittelt, bei der die für den späteren Einsatz im beschriebenen Verfahren verwendeten Suprapartikel oder Suprapartikelcluster auf einem gleichem wie dem später im beschriebenen Verfahren eingesetzten Untergrund oder einer ähnlichen Umgebung, also beispielsweise einer Elektrodenbahn mit gleicher Beschaffenheit oder einer Beschichtung mit gleicher Zusammensetzung, vermessen werden. Der Feuchtegehalt der Beschichtung oder Elektrodenbahn ist dabei bekannt. Beispielsweise wird der Feuchtegehalt der Beschichtung in der Testphase mittels eines herkömmlichen Verfahrens bestimmt. Beispielsweise wird eine kleine Probe ausgeschnitten und im Labor mittels Karl-Fischer-Titration analysiert.

Dieser zeitaufwändige Prozess muss insbesondere lediglich einmalig in der Testphase mittels einer Testreihe durchgeführt werden, wobei für verschiedene Trocknungsstufen oder verschiedene Zeitdauern der erfolgten Trocknung die Lumineszenzstrahlung gemessen wird, die jeweils dazugehörigen Messungen der Feuchtigkeit mittels alternativer Verfahren durchgeführt werden und der so bestimmte Feuchtegehalt dem gemessenen Kennwert der Lumineszenzstrahlung zugeordnet wird. Insbesondere erfolgt die Vermessung der Lumineszenzstrahlung unter Laborbedingungen sowie die Vermessung des Feuchtegehalts mittels herkömmlicher Messmethoden ebenfalls unter Laborbedingungen.

In Ausgestaltungen werden die Suprapartikel oder Suprapartikelcluster bei ihrer Herstellung vermessen. Beispielsweise wird die Feuchtigkeit durch mit den Lösemitteln vergleichbare Mittel oder durch die später eingesetzten Lösemittel in die Umgebung oder den Untergrund eingebracht.

So wird messbaren Kennwerten der Lumineszenzstrahlung der Suprapartikel oder Suprapartikelcluster ein Restfeuchtegehalt der Beschichtung zugeordnet. Daraus ergibt sich die Korrelation, die dann im laufenden Betrieb der Batteriezellherstellung bereitgestellt wird, um abzuschätzen, wie gut der Trocknungsprozess eingestellt ist oder durchgeführt wurde, oder welches weitere Trocknungsverfahren ggf. noch nötig ist.

Somit wird eine inline-Bestimmung des Restgehalts von Lösungsmitteln in Materialbahnen während des Trocknungsprozesses bei der Batteriezellfertigung ermöglicht. Dadurch wird der Trocknungsprozess optimiert: eine üblicherweise stattfindende Übertrocknung der Elektrodenbahn entfällt vorteilhafterweise, und es ist dennoch sichergestellt, dass der gewünschte Trocknungsgrad erreicht wird. In der Folge wird der Energieverbrauch reduziert und die Qualität der hergestellten Batteriezellen verbessert, da der erforderliche Trocknungsgrad auch dann erreicht wird, wenn der Energieeintrag minimiert wird. Vorteilhafterweise wird der Energieeintrag auf das physikalisch erforderliche Maß reduziert, also die durch die Verdampfungsenthalpie bestimmte Energie.

Die Gefahr eines zu hohen oder nicht identifizierten Restfeuchtegehalts mit negativen Auswirkungen auf die Qualität der aus den Elektroden gefertigten Batteriezellen wird mit dem vorgeschlagenen Verfahren reduziert.

Gemäß einer Ausgestaltung werden zur Behandlung der Beschichtung für die Restfeuchtebestimmung Suprapartikel oder Suprapartikelcluster bereitgestellt und auf oder neben die Beschichtung aufgebracht oder in die Beschichtung eingebracht.

Beispielsweise wird eine Dosiervorrichtung vorgesehen, mittels der die Suprapartikel oder Suprapartikelcluster in einem Prozessschritt nach einem Aufbringen der Beschichtung auf oder neben die Elektrodenbahn, insbesondere direkt angrenzend an die Beschichtung, aufgebracht werden. In anderen Varianten werden die Suprapartikel oder Suprapartikelcluster in den Slurry eingemischt und somit zusammen mit dem Slurry aufgebracht, so dass sie bereits beim Aufbringen Bestandteil der Beschichtung sind.

Gemäß einer Ausgestaltung werden die Suprapartikel oder Suprapartikelcluster vor dem Trocknungsprozess aufgebracht oder eingebracht.

Insbesondere werden die Suprapartikel oder Suprapartikelcluster vor dem Start des Trocknungsschrittes, insbesondere räumlich einem gasbeheizten Abschnitt vorgelagert, aufgebracht oder eingebracht. Insbesondere werden sie beim Beschichten einer Ableiterfolie mit dem Slurry aufgebracht. Insbesondere sind die Suprapartikel oder Suprapartikelcluster bereits beim Start des Trocknungsprozesses aufgebracht, damit Beschichtung und Suprapartikel oder Suprapartikelcluster einheitlich und gleichermaßen durchfeuchtet sind und zudem dem gleichen Trocknungsprozess oder der gleichen Trocknungsdauer ausgesetzt waren, wenn die Messung der Lumineszenzstrahlung durchgeführt wird.

Gemäß einer Ausgestaltung wird der erste Kennwert ortsaufgelöst, insbesondere ortsaufgelöst entlang einer Materialbahnbewegung im Batterieherstellungsprozess oder senkrecht dazu, bestimmt.

Es werden beispielsweise mehrere Kennwerte jeweils ortsaufgelöst bestimmt. Die aufgenommenen Messwerte werden gekennzeichnet oder nummeriert, so dass mehrere Kennwerte in einem Elektrodenbahnabschnitt bestehen, die insbesondere alle mit einem Restfeuchtegehalt korreliert werden. Somit bestehen Aussagen über eine Restfeuchte in vorgebbaren Abschnitten der Materialbahn. Beispielsweise wird so überprüft, ob ein Trocknungsvorgang gleichmäßig über die Breite der Bahn ausgelegt ist. Beispielsweise kann ferner bei Messungen entlang der Bahn ein Verlauf des Trocknungsprozesses analysiert werden. Beispielsweise können Änderungen in der Zusammensetzung der Beschichtung erfasst werden, insbesondere erhöhte Lösemittelkonzentrationen. Ferner können Anpassungen von Trocknungsparameters und deren Auswirkungen auf den Restfeuchtegehalt beobachtet werden.

Gemäß einer Ausgestaltung wird anhand des zugeordneten Restfeuchtegehalts eine Rückkopplung zu einem Steuerungsmechanismus für den Trocknungsprozess, insbesondere einen Trocknungsprozess mit ortsaufgelöst steuerbarer Anwendung, insbesondere mit ortsaufgelöst steuerbarer Trocknungsintensität, durchgeführt. Hierfür eignen sich insbesondere IR-Lampen oder Laser.

So wird eine optimierte Steuerung des Trocknungsprozesses ermöglicht, die insbesondere ohne aufwändige Kalibrierung auskommt und eine flexible Anpassung der Trocknungsparameter in Echtzeit erlaubt. Sobald im laufenden Prozess ein Restfeuchtegehalt oberhalb oder unterhalb eines vorgebbaren Schwellenwertes oder außerhalb eines vorgebbaren Normbereichs zugeordnet oder festgestellt wird, wird der Trocknungsprozess angepasst. Beispielsweise werden eine Trocknungstemperatur oder eine Trocknungsdauer reduziert, wenn eine zu niedrige Restfeuchte festgestellt wird. Beispielsweise werden eine Trocknungstemperatur oder eine Trocknungsdauer erhöht, falls ein zu hoher Restfeuchtegehalt festgestellt wird. So werden die nachfolgend zu bearbeitenden oder zu trocknenden Elektrodenabschnitte unter besseren Bedingungen getrocknet oder es kann eine höhere Genauigkeit für einen angestrebten Restfeuchtegehalt erzielt werden.

Die Rückkopplung zur Steuerung als Reaktion auf den ermittelten Restfeuchtegehalt ist vorteilhafterweise möglich, da die Ermittlung der Restfeuchte im Material mittels der Suprapartikel oder Suprapartikelcluster direkt im Herstellungsprozess erfolgt und nicht in einem nachgelagerten Analyseschritt. Die dadurch realisierte Regelung während des Beschichtungsprozesses ermöglicht eine schnellere Optimierung von Trocknungsparametern und es wird in der Folge weniger Ausschuss produziert.

Erlaubt der Trocknungsprozess eine örtlich variable Änderung der Trocknungsparameter, so kann auf ebenso lediglich örtlich vorhandene Abweichungen von der Soll-Restfeuchte reagiert werden und nur in den entsprechenden Bereichen nachgetrocknet werden.

Gemäß einer Ausgestaltung wird anhand des zugeordneten Restfeuchtegehalts ein weiterer Trocknungsprozess, insbesondere ein Trocknungsprozess mit ortsaufgelöst steuerbarer Anwendung, insbesondere mit ortsaufgelöst steuerbarer Trocknungsintensität, durchgeführt.

Für die vermessenen Bereiche kann so beispielsweise ein nachgelagerter Trocknungsprozess angeschlossen werden, wenn Bereiche mit zu hohem Restfeuchtegehalt erkannt werden. Auch diese Reaktion auf den ermittelten Restfeuchtegehalt ist vorteilhafterweise möglich, da die Ermittlung der Restfeuchte im Material mittels der Suprapartikel oder Suprapartikelcluster direkt im Herstellungsprozess erfolgt und nicht in einem nachgelagerten Analyseschritt.

Dadurch wird ein selektives Nachtrocknen durch einen zweiten Trocknungsschritt möglich: Beispielsweise werden nur die Bahnabschnitte nachgetrocknet, die über ihr Luminiszenzverhalten als noch zu feucht identifiziert wurden. So kann ein nachgelagerter Trocknungsschritt beispielsweise basierend auf einer gezielten Zuschaltung eines Lasers oder von IR-Lampen erfolgen. Beispielsweise erfolgt der nachgelagerte Trocknungsschritt bei einer erkannten zu hohen Restfeuchte im Material. Insbesondere werden Parameter, wie beispielsweise Intensität oder Dauer einer Lasertrocknung oder örtliche Anwendung einer Lasertrocknung basierend auf der ermittelten Restfeuchte und ggf. ortsaufgelöst vorliegenden Kennwerten ermittelt. Ferner können auch IR-Lampen über die Breite der Bahn örtlich begrenzt zugeschaltet werden und deren Beleuchtungsdauer und -intensität geregelt werden.

Die Nachtrocknung erfolgt beispielsweise selektiv in Bezug auf eine Position entlang der Bewegungsrichtung der Materialbahn oder senkrecht dazu.

Gemäß einer Ausgestaltung wird zeitlich nach dem weiteren Trocknungsprozess mindestens ein zweiter Kennwert bestimmt zum Zuordnen zu einem zweiten Restfeuchtegehalt. Insbesondere wird die Messung nach einem weiteren nachgelagerten Trocknungsvorgang wiederholt, um den Fortschritt und das Ergebnis der Trocknung festzustellen. Insbesondere werden erst darauf basierend oder zudem darauf basierend der Trocknungsprozess und/ oder der weitere Trocknungsprozess angepasst. Vorteilhaft werden mehrstufige Trocknungsverfahren so optimiert.

Gemäß einer Ausgestaltung werden die Suprapartikel oder Suprapartikelcluster auf oder neben eine Elektrodenbahn aufgebracht. Die Eigenschaften der Suprapartikel oder Suprapartikelcluster werden beispielsweise so ausgestaltet, dass ein Anlagern auf der Oberfläche ohne Auswirkung auf die geforderten Eigenschaften der Elektrode in der zu fertigenden Zelle hat. Alternativ werden die Suprapartikel oder Suprapartikelcluster neben, insbesondere am Rand neben der Elektrodenbahn, beispielsweise in einem vorgesehenen Randbereich oder einem seitlich überstehenden Bereich der nicht beschichteten metallischen Ableiterfolie, aufgebracht. Es wird sichergestellt, dass der Feuchtegehalt an dieser Stelle identisch oder vergleichbar mit dem der Beschichtung auf der Elektrode ist, beispielsweise indem Kontakt zwischen den Suprapartikeln oder Suprapartikelclustern und der Beschichtung besteht oder die Suprapartikel oder Suprapartikelcluster auf einer speziellen Mess-Beschichtung aufgebracht sind, die nur zu Zwecken der Restfeuchtemessung eingesetzt wird und ein Durchfeuchten der Suprapartikel oder Suprapartikelcluster mit dem Lösemittel bewirkt.

Gemäß einer Ausgestaltung werden die Suprapartikel oder Suprapartikelcluster in ein Elektrodenslurry eingerührt. Somit sind die Suprapartikel oder Suprapartikelcluster gesichert bereits mit dem Schritt des Beschichtens Bestandteil der Elektrodenbahn und durchleben die exakt gleichen Bedingungen wie die Beschichtung selbst. Somit kommt es zu keinerlei Abweichungen zwischen den Trocknungsbedingungen der Beschichtung selbst und den Suprapartikeln oder Suprapartikelclustern.

Gemäß einer Ausgestaltung erfolgt das Bestimmen des ersten Kennwertes der Lumineszenzstrahlung mittels mindestens eines Spektrometers. Beispielsweise ist das Spektrometer fest innerhalb der Produktionslinie verbaut und misst an einer festlegbaren Stelle. Beispielsweise ist das Spektrometer in Richtung der Materialbahn oder senkrecht dazu verfahrbar angeordnet, um eine ortsaufgelöste Messung zu ermöglichen oder es sind mehrere Spektrometer nebeneinander vorgesehen.

Gemäß einer Ausgestaltung wird als eine Kenngröße des Kennwertes eine Intensität der Lumineszenzstrahlung verwendet. Beispielsweise zeigen die Suprapartikel oder Suprapartikelcluster in feuchtem Zustand wenig Lumineszenz, während mit zunehmender Trocknung die Lumineszenz stark zunimmt. Vorteilhafterweise hängt die Intensität der Lumineszenzstrahlung monoton von der Feuchtigkeitsmenge in der Elektrode ab, so dass eine Kalibration der Intensität auf den Feuchtegehalt in einer Testphase möglich ist und diese Kalibration als Grundlage genutzt werden kann. Beispielsweise verändern die Suprapartikel oder Suprapartikelcluster schrittweise ihr Lumineszenzverhalten, insbesondere indem das Lumineszenzverhalten sprunghaft von "ein", i.S.v. annähernd konstante Intensität, auf "aus", i.S.v. Intensität annähernd null, wechselt. Vorteilhafterweise erfolgt dieser Sprung bei Erreichen des gewünschten Restfeuchtewertes bzw. Trocknungsgrades.

Gemäß einer Ausgestaltung wird als eine Kenngröße des Kennwertes eine Frequenz eines Emissionsspektrums, insbesondere die Frequenz eines Emissionsmaximums, verwendet. So wird eine Verschiebung des Emissionsmaximums, die mit veränderter Feuchtigkeit korreliert, als Merkmal zur Feuchtebestimmung verwendet.

Die Erfindung betrifft ferner eine Vorrichtung zur Bestimmung einer durch Lösemittel bedingten Restfeuchte, ausgebildet und eingerichtet zur Durchführung des Verfahrens nach einem der obigen Verfahren und Ausgestaltungen. Die Erfindung umfasst insbesondere ein Spektrometer sowie eine Recheneinrichtung zur Auswertung der Messung des Spektrometers. In Ausgestaltungen ist die Recheneinrichtung Teil eines Industrie-PCs, der auch Steuerungsaufgaben des Batteriezellherstellungsprozesses ausführt.

Gemäß einer Ausgestaltung ist eine Dosiervorrichtung für das Aufbringen oder Einbringen der Suprapartikel oder Suprapartikelcluster vorgesehen. Die Dosiervorrichtung erhält beispielsweise eine Sorte Suprapartikel und bringt Partikel oder Partikelcluster gleichmäßig oder in vorgebbaren zeitlichen oder räumlichen Abständen auf. In Varianten erhält die Dosiervorrichtung die Suprapartikel oder Suprapartikelcluster als Bestandteil der aufzubringenden Beschichtung und erfüllt somit zugleich die Funktionalität einer Schlitzdüse o.ä.

Gemäß einer Ausgestaltung ist ein Spektrometer zum Bestimmen des ersten Kennwertes der Lumineszenzstrahlung vorgesehen und/ oder ein zweites Spektrometer zum Bestimmen der zweiten Kennwertes der Lumineszenzstrahlung. Das Spektrometer oder die Spektrometer sind beispielsweise verfahrbar in Richtung der Materialbahn oder senkrecht dazu angeordnet.

Die Erfindung wird nachfolgend anhand von Ausführungsbeispielen mit Hilfe der Figuren näher erläutert. Es zeigen:
- Figur 1: eine schematische Darstellung eines Ausschnitts einer Batteriezellfertigung zur Veranschaulichung des Aufbringens von Suprapartikelclustern gemäß einem ersten Ausführungsbeispiel;
- Figur 2: eine schematische Darstellung eines Ausschnitts einer Batteriezellfertigung zur Veranschaulichung des Vermessens einer Lumineszenzstrahlung von Bahnabschnitten gemäß dem ersten Ausführungsbeispiel;
- Figur 3: eine schematische Darstellung eines Ausschnitts einer Batteriezellfertigung zur Veranschaulichung des Aufbringens von Suprapartikelclustern gemäß einem zweiten Ausführungsbeispiel;
- Figur 4: eine schematische Darstellung eines Ausschnitts einer Batteriezellfertigung zur Veranschaulichung des Vermessens einer Lumineszenzstrahlung von Bahnabschnitten gemäß einem dritten Ausführungsbeispiel.

In den Figuren sind funktionsgleiche Elemente mit denselben Bezugszeichen versehen, sofern nichts anderes angegeben ist.

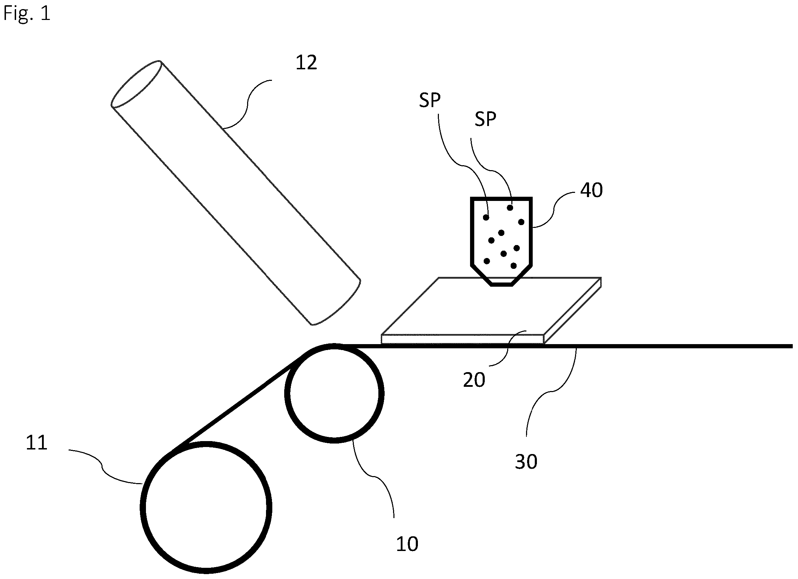

Figur 1 zeigt schematisch einen Schritt innerhalb eines Batteriezellherstellungsprozesses, bei dem eine Materialbahn 30 mit einem Aktivmaterial für eine Anode oder Kathode beschichtet wird und die Beschichtung 20 mit der Materialbahn 30 zusammen die spätere Elektrodenfolie bildet. Insbesondere wird das Aktivmaterial in Abschnitten aufgetragen. Als Beschichtung 20 wird der sogenannte Elektrodenslurry aufgetragen, der neben Aktivmaterialien unter anderem auch Lösungsmittel enthält. Der Elektrodenmaterialslurry wird von einer Zuführvorrichtung 12, beispielsweise einem Bestandteil eines Mischers oder eines Aufbewahrungscontainers für den Slurry, im Prozess bereitgestellt. Die Materialbahn 20 läuft insbesondere über Umlenkrollen 10 oder Abwickler 11 und wird kontinuierlich im Prozess weiterbefördert und bearbeitet.

Das Aktivmaterial wird mittels eines Auftragssystems der Zuführvorrichtung 12, insbesondere mittels einer Schlitzdüse, auf die Bahn aufgebracht. Nachgelagert zum Beschichtungsvorgang werden Suprapartikel SP aus einem Behältnis 40 aufgetragen. Das Auftragen erfolgt mittels eines Mechanismus, der insbesondere das Anlagern von Suprapartikelclustern SC1, SC2 in gleichmäßigen Abständen sicherstellt. Mehrere Partikel SP werden auf die Elektrodenbahn abgesetzt und bilden ein Cluster. Beispielsweise erfolgt das Aufbringen durch Aufsprühen oder Aufdampfen. Beispielsweise werden die Cluster als kleine Häufchen oder Tröpfchen mittels pipettenartiger Sonden oder Tropfvorrichtungen abgesetzt. Alternativ können die Suprapartikelcluster auch flächig aufgetragen werden.

Die eingesetzten Suprapartikel und/ oder die gebildeten Suprapartikelcluster sind vom gleichen Typ, d.h. weisen die gleichen charakteristischen Eigenschaften auf, und sind so gewählt, dass das Lumineszenzverhalten in Abhängigkeit von dem Feuchtegehalt der Suprapartikel einheitlich ist.

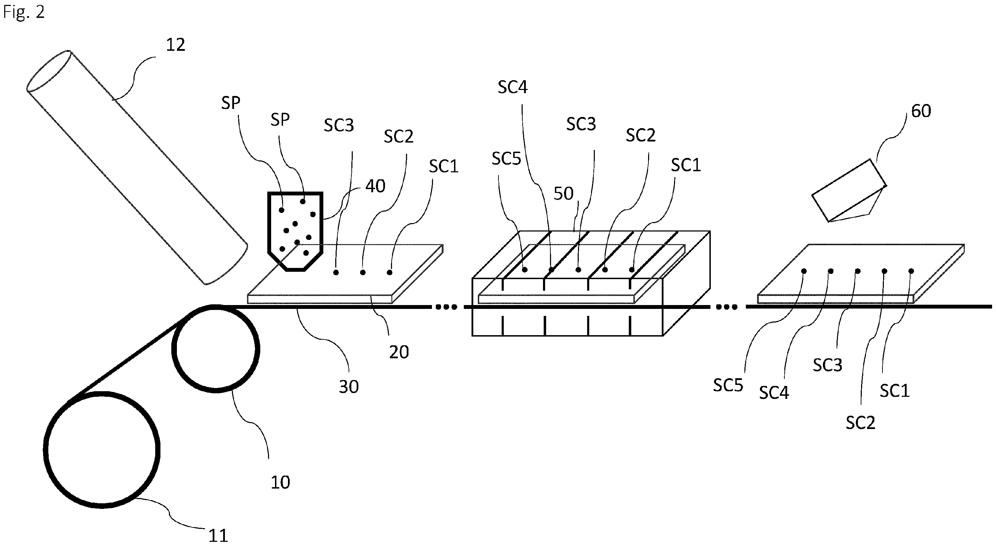

In Figur 2 sind die aufgebrachten Suprapartikelcluster SC1, SC2, SC3 zu sehen. Bei Untersuchung des Materials, an dem die Suprapartikelcluster SC1, SC2, SC3 angelagert sind, mit einem Spektrometer zur Erfassung einer von den Suprapartikelclustern SC1, SC2 ausgehenden Strahlung, lässt sich für alle Suprapartikelcluster SC1, SC2, SC3 ein annähernd gleiches Emissionsverhalten feststellen, das je nach Feuchtigkeit zu charakteristischer Strahlungsintensität oder charakteristischem Emissionsmaximum führt.

Die Suprapartikelcluster SC1, SC2, SC3 werden insbesondere einzeln auf die Beschichtung 20 in gleichmäßigen Abständen entlang der Bewegungsrichtung der Materialbahn aufgebracht.

Figur 2 veranschaulicht zudem weitere Prozessschritte im Batteriezellherstellungsprozess, insbesondere das Trocknen in einem Trocknungsofen 50. Die Elektrodenfolie, insbesondere die beschichteten Abschnitte, wird mit den darauf befindlichen Suprapartikelclustern SC1, SC2, SC3, SC4, SC5 durch den Trocknungsofen 50 geleitet und dort in mehreren aufeinander folgenden schematisch angedeuteten Kammern getrocknet.

Nach dem Trocknungsvorgang erfolgt eine Analyse mit einem Spektrometer 60, das die von den Suprapartikelclustern SC1, SC2, SC3, SC4, SC5 emittierte Strahlung aufzeichnet und in Hinblick auf Intensität oder Frequenzverteilung analysiert. Beispielsweise untersucht das Spektrometer 60 als Kenngröße eine Strahlungsintensität und ermittelt einen Kennwert der Strahlungsintensität. Der Kennwert wird anhand einer bereitgestellten Korrelation mit abgeglichen. Beispielsweise leitet das Spektrometer den ermittelten Kennwert an eine Recheneinheit (nicht abgebildet) weiter, die Zugriff auf die Korrelation hat, beispielsweise auf die an einem zentralen Speicherplatz hinterlegte Korrelation, die in einer Testphase vorab anhand der eingesetzten Suprapartikelsorte SP als Referenz erstellt wurde. So wurde beispielsweise eine Kennwerttabelle erstellt und gespeichert, die für gemessene Kennwerte den entsprechenden Feuchtegehalt ausgibt. Beispielsweise wird eine Zuordnungsvorschrift aus einzelnen Messwerten von Strahlungsintensität und Feuchtegehalt gebildet, die für das kontinuierliche Kennwertespektrum die zugehörigen intra- oder extrapolierten Feuchtegehaltwerte ausgibt. Die Recheneinheit gibt den Wert entweder selbst über ein HMI aus oder leitet ihn an das Spektrometer 60 weiter zur dortigen Ausgabe über ein Display o.ä.

Beispielsweise wird als Recheneinheit ein Industrie-PC eingesetzt, der zugleich Steuerungsfunktionalität besitzt und aus dem gemessenen Kennwert und dem zugeordneten Restfeuchtewert eine Reaktion ableitet, die sich auf die Trocknungsparameter auswirkt. Beispielsweise wird im Falle, dass der Restfeuchtegehalt oberhalb eines oberen Grenzwertes liegt, eine Trocknungsdauer verlängert oder eine Temperatur im Trocknungsofen 50 erhöht.

So wird auf Veränderungen im Verarbeitungsprozess, die zu einer zu hohen oder zu niedrigen Restfeuchte führen, inline und damit schnellstmöglich reagiert. Es werden typischerweise über die Zeit entstehende Fehleinstellungen des Trocknungsofens oder sich verändernde Materialzusammensetzungen der Beschichtung bemerkt und durch Nachregeln des Prozesses ausgeglichen.

In Varianten können mit den ermittelten Restfeuchtewerten geeignete weitere Trocknungsmaßnahmen eingeleitet werden wie insbesondere eine sich anschließende Lasertrocknung oder die Trocknung mittels IR-Lampen, die speziell an den ermittelten zu feuchten Stellen nachtrocknet.

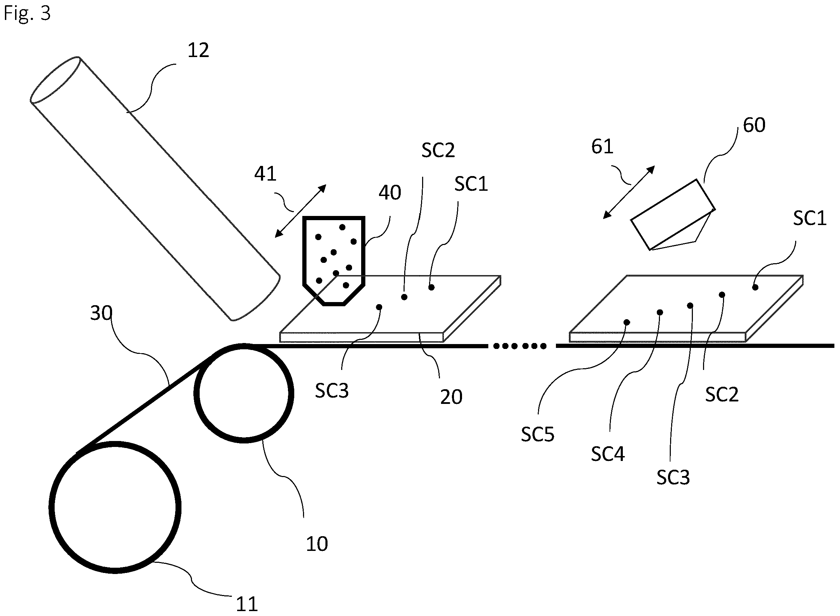

Gemäß einem zweiten in Figur 3 veranschaulichten Ausführungsbeispiel werden die Suprapartikelcluster SC1, SC2, SC3, SC4, SC5 senkrecht zur Bewegungsrichtung der Materialbahn nebeneinander aufgetragen. Entsprechend erfolgt eine Vermessung mit dem Spektrometer 60 ebenfalls senkrecht zur Bewegungsrichtung. Das Behältnis 40 mit den Suprapartikeln SP sowie das Spektrometer 60 sind dafür jeweils senkrecht zur Bewegungsrichtung verfahrbar angeordnet, veranschaulicht durch Pfeile 41, 61. So werden typischerweise systematische Fehler oder Fehleinstellungen im Trocknungsofen bemerkt, sowie Abweichungen im Restfeuchtegehalt aufgrund schwankender Materialzusammensetzung, die sich auf die Restfeuchte sowohl entlang der Bewegungsrichtung als auch senkrecht dazu auswirken können.

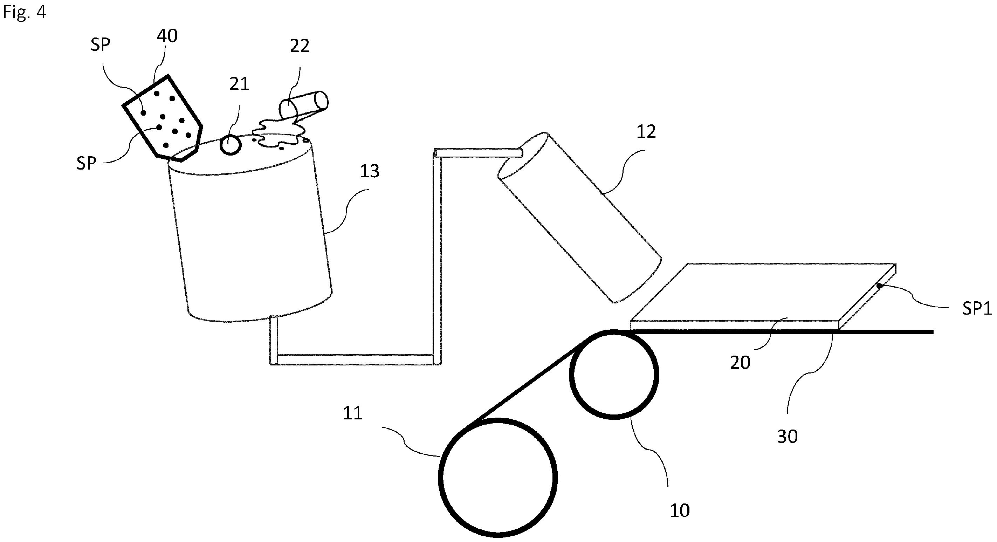

Figur 4 veranschaulicht ein drittes Ausführungsbeispiel, in dem Suprapartikel SP1, SP2 zum Einsatz kommen. Diese werden bereits während des Mischens bei der Herstellung des Slurrys hinzugefügt. Beispielsweise werden sie mit dem Aktivmaterial 21, Lösemittel 22 etc. in einen Mischer 13 eingebracht und mittels der Zuführvorrichtung 12 (vereinfacht dargestellt) aufgebracht. Sie liegen somit zum Zeitpunkt des Beschichtens bereits als Bestandteil der Beschichtung 20 vor. Die Suprapartikel, veranschaulicht mit einem Suprapartikel SP1, sind gemäß diesem dritten Ausführungsbeispiel aufgrund des Einmischens in die Beschichtung 20 nach dem Beschichten gleichmäßig verteilt auf der Elektrodenfolie vorhanden.

Die eingesetzten Suprapartikelcluster verändern schrittweise ihr Lumineszenzverhalten, insbesondere indem das Lumineszenzverhalten sprunghaft von "ein", i.S.v. annähernd konstante Intensität, auf "aus", i.S.v. Intensität annähernd null, wechselt. Ein für die Vermessung der Lumineszenzstrahlung eingesetztes Spektrometer erfasst die Intensität der Strahlung entlang der Materialbahn. Die Unstetigkeit der Strahlungsintensität tritt in einem Restfeuchtebereich auf, der beim Trocknen als Endzustand angestrebt wird, beispielsweise bei ca. 500 ppm Lösemittel auf der Anodenseite und ca. 100-200 ppm auf der Kathodenseite.

Die Erfindung betrifft ein Verfahren und eine Vorrichtung zur Bestimmung einer durch Lösemittel bedingten Restfeuchte im Trocknungsprozess von Batteriezellelektroden.

## Patentansprüche

1. Verfahren zur Bestimmung einer durch Lösemittel (22) bedingten Restfeuchte, wobei das Lösemittel (22) in einer Beschichtung (20) für Batteriezellelektroden enthalten ist, aufweisend die folgenden Schritte:
- Bestimmen mindestens eines ersten Kennwertes einer Lumineszenzstrahlung der Beschichtung (20) nach einem Trocknungsprozess der Beschichtung (20), wobei die Lumineszenzstrahlung durch Suprapartikel (SP, SP1) oder Suprapartikelcluster (SC1, SC2, ...) auf, neben oder in der Beschichtung (20) hervorgerufen wird,
- Zuordnen des bestimmten ersten Kennwertes zu einem, insbesondere ersten, Restfeuchtegehalt der Beschichtung (20) anhand einer bereitgestellten Korrelation, wobei die Korrelation Kennwerten der Lumineszenzstrahlung einen jeweiligen Feuchtegehalt zuordnet.

2. Verfahren nach Anspruch 1, wobei zur Behandlung der Beschichtung (20) für die Restfeuchtebestimmung Suprapartikel (SP, SP1) oder Suprapartikelcluster (SC1, SC2, ...) bereitgestellt werden und auf oder neben die Beschichtung (20) aufgebracht oder in die Beschichtung (20) eingebracht werden.

3. Verfahren nach Anspruch 1 oder 2, wobei die Suprapartikel (SP, SP1) oder Suprapartikelcluster (SC1, SC2, ...) vor dem Trocknungsprozess aufgebracht oder eingebracht werden.

4. Verfahren nach einem der vorstehenden Ansprüche, wobei der erste Kennwert ortsaufgelöst, insbesondere ortsaufgelöst entlang einer Materialbahnbewegung im Batterieherstellungsprozess oder senkrecht dazu, bestimmt wird.

5. Verfahren nach einem der vorstehenden Ansprüche, wobei anhand des zugeordneten Restfeuchtegehalts eine Rückkopplung zu einem Steuerungsmechanismus für den Trocknungsprozess, insbesondere einen Trocknungsprozess mit ortsaufgelöst steuerbarer Anwendung, insbesondere mit ortsaufgelöst steuerbarer Trocknungsintensität, durchgeführt wird.

6. Verfahren nach einem der vorstehenden Ansprüche, wobei anhand des zugeordneten Restfeuchtegehalts ein weiterer Trocknungsprozess, insbesondere ein Trocknungsprozess mit ortsaufgelöst steuerbarer Trocknungsintensität, durchgeführt wird.

7. Verfahren nach Anspruch 6, wobei zeitlich nach dem weiteren Trocknungsprozess mindestens ein zweiter Kennwert bestimmt wird zum Zuordnen zu einem zweiten Restfeuchtegehalt.

8. Verfahren nach einem der vorstehenden Ansprüche, wobei die Suprapartikel (SP, SP1) oder Suprapartikelcluster (SC1, SC2,...) auf oder neben eine Elektrodenbahn aufgebracht werden.

9. Verfahren nach einem der vorstehenden Ansprüche, wobei die Suprapartikel (SP, SP1) oder Suprapartikelcluster (SC1, SC2,...) in ein Elektrodenslurry eingerührt werden.

10. Verfahren nach einem der vorstehenden Ansprüche, wobei das Bestimmen des ersten Kennwertes und/ oder des zweiten Kennwertes der Lumineszenzstrahlung mittels mindestens eines Spektrometers (60) erfolgt.

11. Verfahren nach einem der vorstehenden Ansprüche, wobei als eine Kenngröße des Kennwertes eine Intensität der Lumineszenzstrahlung verwendet wird.

12. Verfahren nach einem der vorstehenden Ansprüche, wobei als eine Kenngröße des Kennwertes eine Frequenz eines Emissionsspektrums, insbesondere die Frequenz eines Emissionsmaximums, verwendet wird.

13. Vorrichtung zur Bestimmung einer durch Lösemittel bedingten Restfeuchte, ausgebildet und eingerichtet zur Durchführung des Verfahrens nach einem der Ansprüche 1 bis 12.

14. Vorrichtung nach Anspruch 13, aufweisend eine Dosiervorrichtung (40, 12) für das Aufbringen oder Einbringen der Suprapartikel (SP, SP1) oder Suprapartikelcluster (SC1, SC2,...).

15. Vorrichtung nach Anspruch 13 oder 14, aufweisend ein Spektrometer (60) zum Bestimmen des ersten Kennwertes der Lumineszenzstrahlung und/ oder ein zweites Spektrometer zum Bestimmen des zweiten Kennwertes der Lumineszenzstrahlung.
